# EUROPÄISCHE PATENTSCHRIFT

(11) **EP 0 881 435 B1**
(45) Veröffentlichungstag und Bekanntmachung des Hinweises auf die Patenterteilung: **26.09.2001**
(21) Anmeldenummer: 98108680.4
(22) Anmeldetag: 13.05.1998
(51) Int. Cl.: F23N 1/00, G05D 16/20

(54) **Zweistufen-Servoregler**
Two stage servo controller
Servorégulateur à deux étages

(30) Priorität: 30.05.1997 DE 19722600
(43) Veröffentlichungstag der Anmeldung: 02.12.1998
(73) Patentinhaber: KARL DUNGS GMBH & CO., D-73660 Urbach (DE)
(72) Erfinder: Neu, Kunibert, Dr., 73117 Wangen (DE)
(74) Vertreter: KOHLER SCHMID + PARTNER

(56) Entgegenhaltungen:
- EP-A- 0 109 978
- EP-A- 0 437 837
- EP-A- 0 740 242
- WO-A-96/11350
- DE-A- 3 524 015
- GB-A- 2 170 929
- US-A- 4 785 846

## Beschreibung

Die Erfindung betrifft einen Zweistufen-Servoregler zum Einstellen von zwei unterschiedlichen, jeweils an eine Laststufe eines mehrstufigen Brenners angepaßten Gasdrücken, mit einem Stellglied, über das der in einem Eingangsdruckraum vor dem Stellglied herrschende Druck auf einen geringeren Druck in einem Ausgangsdruckraum hinter dem Stellglied eingestellt werden kann, mit einer das Stellglied steuernden Arbeitsmembran, wobei ein auf einer Seite der Arbeitsmembran vorgesehener Arbeitsraum mit dem Eingangsdruckraum in Verbindung steht, mit jeweils einem Pilotregler für jede Laststufe, wobei über jeden Pilotregler jeweils ein ihm zugeordneter Arbeitsraum mit dem Arbeitsraum unter der Arbeitsmembran verbindbar ist und wobei der Arbeitsraum des Pilotreglers für die höhere Laststufe mit dem Ausgangsdruckraum verbunden ist, und mit mindestens einer Betätigungseinrichtung, über die der Pilotregler für die geringere Laststufe aktivierbar oder deaktivierbar ist.

Ein derartiger Zweistufen-Servoregler ist beispielsweise durch die GB 2 170 929 A bekanntgeworden.

Die zweistufige Betriebsweise von sowohl Gasgebläsebrennern als auch Atmosphärenbrennern dient der Verbesserung des verbrennungstechnischen Wirkungsgrades und bedingt das Zumessen der Gasmenge über eine Gasarmatur für die Klein- bzw. Großlast des Brenners, wobei beim Gebläsebrenner durch Verstellen der Luftklappe oder Ändern der Gebläsedrehzahl die Luftmenge für die Klein- und Großlast angepaßt wird, während der reine Atmosphärenbrenner sich seine Verbrennungsluft aus der Umgebung selbst beimischt.

Das Zumessen der zur jeweiligen Klein- bzw. Großlast gehörenden Gasmenge geschieht auch heute noch größtenteils über ein zweistufiges Magnetventil, dessen Funktion es ist, zwei definierte Ventilöffnungsquerschnitte zu erzeugen, die als Drosselstellen einen auf gleichem Vordruck gehaltenen Gasvolumenstrom in zwei definierte Ausgangsvolumenströme umsetzen, wenn von der Kleinlaststufe in die Großlaststufe und umgekehrt geschaltet wird. Das Zu- und Abschalten des zweiten Magneten des Zweistufen-Ventils erzeugt die Gasmenge für die Klein- bzw. Großlast. Dieses Zweistufen-Ventil war die Weiterentwicklung von zwei parallel angeordneten Einzelventilen, wobei jedes der beiden Einzelventile eine Drosseleinrichtung zur Anpassung des Gasvolumenstromes besaß.

Die Funktion eines Zweistufen-Ventils kann auch mit einem Proportional-Magnet-Antrieb erzielt werden, wobei die Einstellung der Gasmengen für die Klein- bzw. Großlast nicht durch das Justieren mechanischer Endanschläge geschieht, sondern durch Vorwahl und Einstellen von Spannungs- oder Stromwerten einer Ansteuerelektronik mit entsprechender Beschaltung.

Die Gasbemessung über eine veränderliche Drosselstelle setzt voraus, daß die Druckkonstanthaltung (Druckregelung) des Gasstromes vor der Drosselstelle stattfindet. Sitzt der Druckregler hinter der letzten der beiden vorgeschriebenen Sicherheitsventile, ist eine Gaszumessung ohne zusätzliche den Strömungsquerschnitt beeinflussende Einrichtungen nur noch über den Regler selbst zu bewerkstelligen. Das Umschalten von der Klein- in die Großlast und umgekehrt ist temperaturabhängig und wird vom Heizkesselregler gesteuert.

Die klassische Gasstraße für den Zweistufenbrenner besteht aus einem eingangsseitigen Gasdruckregler, einem eingangsseitigen Sicherheitsventil und einem nachgeschalteten ausgangsseitigen Zweistufensicherheitsventil. Im Großlastbetrieb sind alle drei Magnetspulen, die auf gleiche Leistung ausgelegt sein müssen, bestromt und wandeln die aufgenommene elektrische Leistung in Wärme um.

Eine am Markt befindliche Zweistufen-Armatur, die den Gasdruckregler am Ausgang hat, benötigt weniger elektrische Energie, weil der eingesetzte dritte Magnet nicht im Zweistufen-Ventil arbeitet, sondern lediglich die Sollwertfeder des Servoreglers von der Kleinlastvorspannkraft in die Großlastvorspannkraft erhöht, was weit weniger Magnetkraft erfordert als das Anheben eines Ventilsitzes von beispielsweise Nennweite 2 Zoll. Die Funktionsweise dieser Zweistufen-Armatur ist deshalb vorteilhaft, weil sie auf indirektem Weg zwei zur jeweiligen Laststufe angepaßte Gasdrücke erzeugt und nicht indirekt auf dem Umweg über eine in Stufen veränderliche Drosselstelle eines Zweistufen-Ventils.

Aus der GB 2 170 929 A ist ein Zweistufen-Servoregler mit mit zwei getrennt voneinander einstellbaren Pilotreglern bekannt, von denen der eine den Kleinlast-Gasdruck und der andere den Großlast-Gasdruck vorgibt. Die Arbeitsräume der beiden Pilotregler sind parallel zueinander geschaltet und an den Ausgangsdruckraum angeschlossen. Die Verbindung zwischen Eingangsdruckraum und den Arbeitsräumen erfolgt druckgesteuert jeweils über eine Arbeitsmembran, wobei bei dem Pilotregler für die Kleinlast die Drucksteuerung über eine Betätigungseinrichtung aktivierbar oder deaktivierbar ist. Diese Betätigungseinrichtung umfaßt einen Magnetstellantrieb, der über eine Druckstange auf die Arbeitsmembran des Pilotreglers für die Kleinlast wirkt, um dessen Arbeitsraum entweder mit dem Eingangsdruckraum zu verbinden oder von diesem abzusperren. Der Magnetstellantrieb mit seiner auf die Arbeitsmembran wirkenden Druckstange erfordert einen ziemlich hohen Fertigungsaufwand und damit hohe Kosten.

Der vorliegenden Erfindung liegt demgegenüber die Aufgabe zugrunde, bei einem Zweistufen-Servoregler der eingangs genannten Art die Betätigungseinrichtung zu vereinfachen.

Diese Aufgabe wird erfindungsgemäß dadurch gelöst, daß die Pilotregler bezüglich dem Ausgangsdruckraum in abnehmender Laststufe hintereinander geschaltet sind und daß die Betätigungseinrichtung als Magnetventil ausgebildet ist, über das der Arbeitsraum des Pilotreglers für die geringere Laststufe mit dem Arbeitsraum des Pilotreglers für die höhere Laststufe verbindbar oder von diesem absperrbar ist.

Um bei einem solchen Mehrstufen-Servoregler einen speziellen Pilotregler bzw. seine bestimmte Laststufe zu aktivieren, braucht lediglich das entsprechende Magnetventil zum Pilotregler der nächsttieferen Laststufe geschlossen zu werden. Das Ab- und Zuschalten der Kleinlaststufe kann insbesondere ein Kleinstmagnetventil übernehmen, das im Doppelpilotreglergehäuse untergebracht sein kann und die Verbindung zum Ausgangsdruckraum öffnet oder schließt.

Bei einer bevorzugten Ausführungsform der Erfindung ist das Stellglied im Bereich der Ventilöffnung eines Ventils angeordnet, so daß der Öffnungsquerschnitt des geöffneten Ventils durch das Stellglied des Servoreglers geändert und damit hinter dem Ventil ein entsprechend geringerer Druck eingestellt werden kann.

Als ganz besonders bevorzugte Ausführungsform ist vorgesehen, daß ein Pilotregler aus einer Membran und einem Membranteller gebildet ist, welcher eine den Arbeitsraum des Pilotreglers mit dem Arbeitsraum unter der Arbeitsmembran verbindende Steueröffnung freigibt oder absperrt. Diese Ausführungsform hat den Vorteil, daß ein z.B. als Ventilteller ausgestalteter Membranteller mit einem Ventilsitz der Steueröffnung auf einfache Weise zusammenwirken kann.

Um die entsprechende Laststufe an einem Pilotregler einstellen oder justieren zu können, ist bei vorteilhaften Ausführungsformen der Erfindung der Pilotregler auf seinen Sollwert, vorzugsweise über eine Sollwertfeder und eine-Sollwertfeder-Vorspanneinrichtung, einstellbar.

In einer ersten vorteilhaften Ausführungsform sind die Pilotregler jeweils als eigenständige Regler ausgebildet, wodurch die andernfalls erforderliche, insbesondere bei höherstufigen Servoreglern kaum praktikable Abstimmung der einzelnen Pilotregler untereinander entfallen kann.

Eine andere zweite Ausführungsform ist dadurch gekennzeichnet, daß zwei Pilotregler über einen Waagebalken miteinander gekoppelt sind, so daß z.B. bei einem Zweistufen-Servoregler der Großlast-Gasdruck als lineares Verhältnis des Kleinlast-Gasdruckes einstellt werden kann.

Als Weiterbildung dieser Ausführungsform ist erfindungsgemäß vorgesehen, daß der Pilotregler für die größere Laststufe mit dem kleineren Hebelarm des Waagebalkens starr verbunden ist und der Pilotregler für die kleinere Laststufe mit dem größeren Hebelarm, vorzugsweise über eine einstellbare Sollwertfeder, in Verbindung steht.

Bei vorteilhaften Ausführungsformen der Erfindung steht ein Referenzdruckraum oberhalb der Arbeitsmembran, insbesondere über eine Bohrung, mit dem Ausgangsdruckraum in Verbindung steht, so daß Druckdifferenzen zwischen Referenzdruckraum und Ausgangsdruckraum ausgeglichen werden können.

Eine ganz besonders bevorzugte Ausführungsform des erfindungsgemäßen Servoreglers ist dadurch gekennzeichnet, daß das Stellglied mit der Arbeitsmembran über einen hohlen Schaft bewegungsgekoppelt ist, dessen Durchgangsbohrung den Eingangsdruckraum mit dem Arbeitsraum unter der Arbeitsmembran verbindet. Diese Ausführungsform hat den Vorteil, daß im Gehäuse keine speziellen Durchgangsbohrungen, die den Arbeitsraum mit dem Eingangsdruckraum verbinden, ausgebildet zu werden brauchen.

Damit die Arbeitsmembran das Stellglied insbesondere bei Stromausfall in seine Schließstellung bewegt, ist die Arbeitsmembran in ihre Schließrichtung, vorzugsweise über eine Druckfeder, beaufschlagt.

Bevorzugt ist der Servoregler als eigenständiger Regler ausgebildet.

Die Erfindung betrifft auch eine Gassicherheitsarmatur mit zwei in Reihe geschalteten Sicherheitsventilen und mit einem wie oben ausgebildeten Servoregler, wobei das Stellglied des Servoreglers nach dem zweiten Sicherheitsventil angeordnet ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: den prinzipiellen Aufbau einer ersten erfindungsgemäßen Ausführungsform eines Zweistufen-Servoreglers in einer Gassicherheitsarmatur; und
- Fig. 2: den prinzipiellen Aufbau einer zweiten erfindungsgemäßen Ausführungsform eines Zweistufen-Servoreglers in einer Gassicherheitsarmatur, bei dem der Großlast-Gasdruck als lineares Verhältnis des Kleinlast-Gasdruckes einstellbar ist.

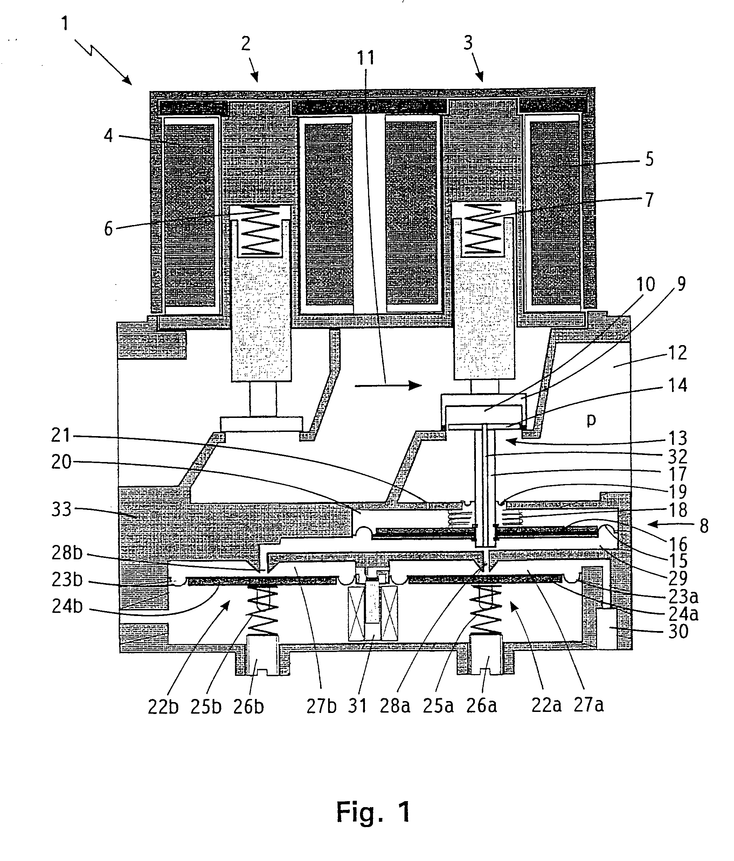

Die in Fig. 1 mit 1 bezeichnete Gassicherheitsarmatur für einen Brenner weist ein eingangsseitiges Sicherheitsventil 2 und ein ausgangsseitiges Sicherheitsventil 3 auf. Beide Ventile 2, 3 sind mittels Magnetspulen 4, 5 öffnenbar und über Druckfedern 6, 7 in ihre Schließposition beaufschlagt.

Mit Hilfe eines Zweistufen-Servoreglers 8 nach dem Ventilteller 9 des zweiten Sicherheitsventils 3 kann der im Eingangsdruckraum 10 vor dem Servoregler 8 herrschende Druck des die Gassicherheitsarmatur 1 in Pfeilrichtung 11 durchströmenden Gases im Ausgangsdruckraum 12 nach dem zweiten Sicherheitsventil 3 wahlweise auf einen Ausgangsdruck pₘᵢₙ für die Kleinlast oder pₘₐₓ für die Großlast des Brenners reduziert werden. In den Figuren stellt der Index a die Großlastseite und der Index b die Kleinlastseite dar.

Zur Druckreduzierung dient ein Reglerventil oder Stellglied 13 des Servoreglers 8, über dessen innerhalb der Öffnung des zweiten Sicherheitsventils 3 angeordnetes Steuerventil 14 der Öffnungsquerschnitt des zweiten Sicherheitsventils 3 veränderbar ist. Eine Arbeitsmembran 15 unterhalb des Steuerventils 14 ist mit diesem über ihren Membranteller 16 und einen hohlen Schaft 17 bewegungsgekoppelt. Arbeitsmembran 15 und Membranteller 16 sind wie der Schaft 17 und das Steuerventil 14 Bestandteile des Stellgliedes 13, das durch eine Druckfeder 18 in schließender Richtung kraftbeaufschlagt ist. Eine Rollmembran 19 dichtet einen über der Arbeitsmembran 15 befindlichen Referenzdruckraum 20 zum Ausgangsdruckraum 12 der Gassicherheitsarmatur 1 ab, wobei eine Bohrung 21 als Dämpfungsdüse die Schließdruckversorgung der Arbeitsmembran 15 herstellt.

Das Stellglied 13 wird von zwei voneinander unabhängig arbeitenden Pilotreglern 22a, 22b gesteuert, von denen der eine auf den Ausgangsdruck pₘᵢₙ und der andere auf pₘₐₓ eingestellt ist. Die beiden Pilotregler 22a, 22b sind gleich aufgebaut und weisen jeweils eine Membran 23a, 23b, einen Membranteller 24a, 24b, eine Sollwertfeder 25a, 25b sowie eine Sollwertfeder-Vorspanneinrichtung 26a, 26b auf. Dabei bilden die Räume 27a, 27b über den Membranen 23a, 23b jeweils deren Arbeitsräume. Die Membranen 23a, 23b sind gleichzeitig Ventilteller für Steueröffnungen 28a und 28b, die jeweils die Arbeitsräume 27a, 27b der Membranen 23a, 23b mit einem gemeinsamen Arbeitsraum 29 unter der Arbeitsmembran 15 verbinden. Die Arbeitsräume 27a, 27b der beiden Pilotregler 22a, 22b stehen außerdem über einen Impulsanschluß 30 mit dem Ausgangsdruckraum 12 in Verbindung, wobei der Arbeitsraum 27b der Membran 23b des Pilotreglers 22b für die Kleinlast über ein Magnetventil 31 von dem Impulsanschluß 30 bzw. von dem Arbeitsraum 27a des Pilotreglers 22a für die Großlast abkoppelbar ist.

Die zur Steuerung des Servoreglers 8 erforderliche Energie wird vom zuströmenden Gasvolumen nach dem zweiten Sicherheitsventil 3 entnommen und über die mit einer Drosselstelle versehene Durchgangsbohrung 32 im Schaft 17 dem Servoregler 8 zugeführt. Bei arbeitendem Servoregler 8 fließt beständig ein Gasvolumen durch die Durchgangsbohrung 32 zum Impulsanschluß 30, der mit einem Gasanschlußrohr zum Brenner verbunden ist, wo sich Hauptgasstrom und Servostrom wieder vereinen. Sowohl der Servoregler 8 als auch die Sicherheitsventile 2, 3 sind entsprechend den geltenden Normen in einem metallenen Gehäuse 33 untergebracht.

Um die Druckregelung aktiv zu halten, fließt ein Steuervolumenstrom durch die Steueröffnungen 28a bzw. 28b. Schließt das Steuerventil 14, so steigt der Druck im Arbeitsraum 29 unter der Arbeitsmembran 15 auf den im Eingangsdruckraum 10 herrschenden Druck vor dem Stellglied 13 an und öffnet dieses, wenn der Druckunterschied zum Referenzdruckraum 20 ausreicht, um das Eigengewicht des Stellgliedes 13 und die Kraft der Druckfeder 18 zu überwinden. Öffnet das Steuerventil 14, so kann sich lediglich der über den Impulsanschluß 30 anstehende Gasdruck im Arbeitsraum 29 unter der Arbeitsmembran 15 ausbilden, so daß die Druckfeder 18 und das Eigengewicht des Stellgliedes 13 den Servoregler 8 schließen, wobei schließend wirkende Druckdifferenzen am Steuerventil 14 selbst außer acht gelassen werden sollen.

Ist das Magnetventil 31 geöffnet, so steht der durch den Impulsanschluß 30 eingeleitete Gasdruck auf beiden Membranen 23a und 23b an, so daß nach Öffnen der beiden Sicherheitsventile 2, 3 der Servoregler 8 so lange öffnet, bis im Arbeitsraum 27b der für die Kleinlast eingestellte Gasdruck erreicht wird und die Membran 23b die Steueröffnung 28b freigibt. Der Ausgangsdruck pₘᵢₙ reicht nicht aus, daß die Membran 23a für die Großlast die Steueröffnung 28a freigibt, so daß allein die Kleinlastversorgung aktiv bleibt.

Wird das Magnetventil 31 geschlossen, so wird der Steuervolumenstrom abgesperrt. Dadurch steigt der Druck im Arbeitsraum 29 unter der Arbeitsmembran 15 an, und das Stellglied 13 öffnet. Der Druck im Ausgangsdruckraum 12 steigt auf Pₘₐₓ, wodurch die Membran 23a die Steuerventilöffnung 28a freigibt und den Großlast-Gasdruck konstant hält. Über die Sollwertfeder-Vorspanneinrichtungen 26a, 26b lassen sich die Sollwertfedern 25a, 25b entsprechend den gewünschten Ausgangsdruckwerten pₘᵢₙ und pₘₐₓ einstellen.

Das Magnetventil 31 braucht lediglich für eine Nennweite von maximal 3 mm und mit einer Schließfeder, die ein sicheres Abdichten seines Ventilsitzes garantiert, ausgelegt zu werden. Dafür kann ein Klasse-C-Ventil ausreichen, da keine Druckdifferenzen auftreten. Ein derartiges Magnetventil 31 kann als gleiche Baugruppe in jeden Zweistufen-Servoregler 8 einer Familienbaureihe eingesetzt werden. Seine Kleinstbauweise erlaubt es, ihn in das Reglergehäuse einzubauen und nur einen elektrischen Anschluß nach außen zu führen.

Die Umschaltung von der Großlast auf die Kleinlast oder umgekehrt geschieht mit diesem Servoregler 8 auf die gleiche Art, wie es bei einem Zweistufen-Ventil der Fall ist. Es braucht daher am Brenner keine andere Steuerung vorgenommen zu werden, was bei Nachrüstungen älterer Brenner mit neuen Gassicherheitsarmaturen 1 von Vorteil ist.

Somit wird erfindungsgemäß die Arbeitsmembran 15 des Stellgliedes 13 des Servoreglers 8 durch die beiden Pilotregler 22a, 22b gesteuert, wobei der eine Pilotregler 22b für die Kleinlast und der andere Pilotregler 22a für die Großlast des Brenners den erforderlichen Gasdruck regelt und die Umschaltung zwischen den beiden Laststufen durch das Ein- und Ausschalten des Magnetventils 31 geschieht, das die beiden Arbeitsräume 27a, 27b der Pilotregler 22a, 22b miteinander verbindet bzw. absperrt.

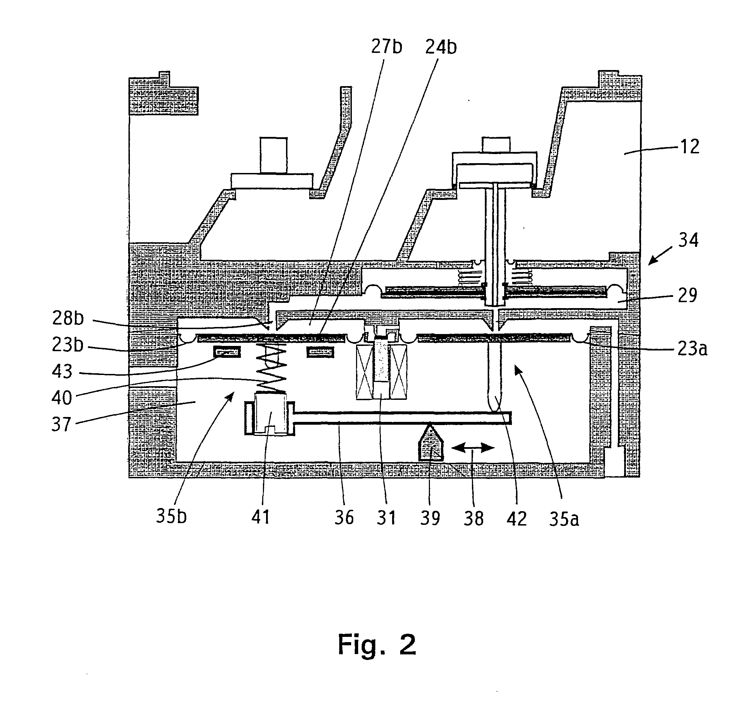

Fig. 2 zeigt eine zweite Ausführungsform eines Zweistufen-Servoreglers 34, der sich gegenüber der ersten Ausführungsform nach Fig. 1 nur durch den Einstellmechanismus seiner beiden Pilotregler 35a und 35b unterscheidet. Die beiden beiden Pilotregler 35a, 35b sind über einen Waagebalken 36 miteinander gekoppelt, der im Raum 37 unter den beiden Membranen 23a und 23b auf einem in Pfeilrichtung 38 verschiebbaren Schneidenlager 39 aufliegt.

Eine Sollwertfeder 40 stützt sich über den Waagebalken 36 gegenüber dem Ventilsitz der Steueröffnung 28b ab, wobei sich über eine Sollwertfeder-Vorspanneinrichtung 41 die Vorspannung der Membran 23b bzw. ihres Membrantellers 24b gegenüber dem Ventilsitz einstellen läßt. Die Membran 23a bzw. ihr Membranteller 24a ist über einen Arm 42 starr mit dem Waagebalken 36 verbunden. Der der Membran 23b zugeordnete Hebelarm des Waagebalkens 36 ist länger als der Hebelarm, der der Membran 23a zugeordnet ist. Der über den Pilotregler 35a bestimmte Gasdruck pₘₐₓ für die Großlast läßt sich so über den Waagebalken 36 als lineares Verhältnis des durch den Pilotregler 35b eingestellten Gasdrucks pₘᵢₙ für die Kleinlast einstellen, wobei das kleinste Verhältnis 1 ist.

Bei geöffnetem Magnetventil 31 herrscht - wie bei der ersten Ausführungsform nach Fig. 1 - auf beiden Membranen 23a, 23b der gleiche Druck, so daß aufgrund des zur Steueröffnung 28b gehörenden längeren Hebelarms des Waagebalkens 36 die Steueröffnung 28b immer verschlossen ist.

Nach dem Schließen des Magnetventils 31 würde der im Ausgangsdruckraum 12 und damit über den Arbeitsraum 29 und die Steueröffnung 28b auch im Arbeitsraum 27b ansteigende Gasdruck die Membran 23b des Pilotreglers 35b für die Kleinlast gegen die Sollwertfeder 40 drücken, diese unerlaubt vorspannen und damit den Großlast-Gasdruck pₘₐₓ in die Höhe treiben. Daher ist der Membranteller 23b durch einen Anschlag 43 an einer Hubvergrößerung gehindert. Bei ansteigendem Gasdruck im Ausgangsdruckraum 12 wird die Membran 23b gegen den Anschlag 43 gedrückt, und ihr Membranteller 24b bildet das ortsfeste Auflager für die Sollwertfeder 40 zur Aufrechterhaltung des Großlast-Gasdruckes pₘₐₓ.

Somit wird erfindungsgemäß über die Sollwertfeder 40 zur Einstellung des Gasdrucks pₘᵢₙ für die Kleinlast gleichzeitig über das einstellbare Hebelverhältnis des Waagebalkens 36 der Gasdruck pₘₐₓ für die Großlast eingestellt, wobei das Magnetventil 31 die Umschaltung zwischen beiden Laststufen steuert.

## Patentansprüche

1. Zweistufen-Servoregler (8; 34) zum Einstellen von zwei unterschiedlichen, jeweils an eine Laststufe eines mehrstufigen Brenners angepaßten Gasdrücken (p),
mit einem Stellglied (13), über das der in einem Eingangsdruckraum (10) vor dem Stellglied (13) herrschende Druck auf einen geringeren Druck (p) in einem Ausgangsdruckraum (12) hinter dem Stellglied (13) eingestellt werden kann,
mit einer das Stellglied (13) steuernden Arbeitsmembran (15), wobei ein auf einer Seite der Arbeitsmembran (15) vorgesehener Arbeitsraum (29) mit dem Eingangsdruckraum (10) in Verbindung steht,
mit jeweils einem Pilotregler (22a, 22b; 35a, 35b) für jede Laststufe, wobei über jeden Pilotregler (22a, 22b; 35a, 35b) jeweils ein ihm zugeordneter Arbeitsraum (27a, 27b) mit dem Arbeitsraum (29) unter der Arbeitsmembran (15) verbindbar ist und wobei der Arbeitsraum (27a) des Pilotreglers (22a; 35a) für die höhere Laststufe mit dem Ausgangsdruckraum (12) verbunden ist,
und mit mindestens einer Betätigungseinrichtung, über die der Pilotregler (22b; 35b) für die geringere Laststufe aktivierbar oder deaktivierbar ist,
**dadurch gekennzeichnet,**
**daß** die Pilotregler (22a, 22b; 35a, 35b) bezüglich dem Ausgangsdruckraum (12) in abnehmender Laststufe hintereinander geschaltet sind und daß die Betätigungseinrichtung als Magnetventil (31) ausgebildet ist, über das der Arbeitsraum (27b) des Pilotreglers (22b; 35b) für die geringere Laststufe mit dem Arbeitsraum (27a) des Pilotreglers (22a; 35a) für die höhere Laststufe verbindbar oder von diesem absperrbar ist.

2. Servoregler nach Anspruch 1, **dadurch gekennzeichnet, daß** das Stellglied (13) im Bereich der Ventilöffnung eines Sicherheitsventils (3) angeordnet ist.

3. Servoregler nach Anspruch 1 oder 2, **dadurch gekennzeichnet, daß** ein Pilotregler (22a, 22b; 35a, 35b) aus einer Membran (23a, 23b) und einem Membranteller (24a, 24b) gebildet ist, welcher eine den Arbeitsraum (27a, 27b) des Pilotreglers (22a, 22b; 35a, 35b) mit dem Arbeitsraum (29) unter der Arbeitsmembran (15) verbindende Steueröffnung (28a, 28b) freigibt oder absperrt.

4. Servoregler nach einem der vorhergehenden Ansprüche, **dadurch gekennzeichnet, daß** ein Pilotregler (22a, 22b; 35a, 35b) auf seinen Sollwert, vorzugsweise über eine Sollwertfeder (25a, 25b; 40) und eine Sollwertfeder-Vorspanneinrichtung (26a, 26b; 41), einstellbar ist.

5. Servoregler nach einem der Ansprüche 1 bis 4, **dadurch gekennzeichnet, daß** die Pilotregler (22a, 22b) jeweils als eigenständige Regler ausgebildet sind.

6. Servoregler nach einem der Ansprüche 1 bis 4, **dadurch gekennzeichnet, daß** zwei Pilotregler (35a, 35b) über einen Waagebalken (36) miteinander gekoppelt sind.

7. Servoregler nach Anspruch 6, **dadurch gekennzeichnet, daß** der Pilotregler (35a) für die größere Laststufe mit dem kleineren Hebelarm des Waagebalkens (36) starr verbunden ist und der Pilotregler (35b) für die kleinere Laststufe mit dem größeren Hebelarm, vorzugsweise über eine einstellbare Sollwertfeder (40), in Verbindung steht.

8. Servoregler nach einem der vorhergehenden Ansprüche, **dadurch gekennzeichnet, daß** ein Referenzdruckraum (20) oberhalb der Arbeitsmembran (15), insbesondere über eine Bohrung (21), mit dem Ausgangsdruckraum (12) in Verbindung steht.

9. Servoregler nach einem der vorhergehenden Ansprüche, **dadurch gekennzeichnet, daß** das Stellglied (13) mit der Arbeitsmembran (15) über einen hohlen Schaft (17) bewegungsgekoppelt ist, dessen Durchgangsbohrung (32) den Eingangsdruckraum (10) mit dem Arbeitsraum (29) unter der Arbeitsmembran (15) verbindet.

10. Servoregler nach einem der vorhergehenden Ansprüche, **dadurch gekennzeichnet, daß** die Arbeitsmembran (15) in ihre Schließrichtung, vorzugsweise über eine Druckfeder (18), beaufschlagt ist.

11. Servoregler nach einem der vorhergehenden Ansprüche, **dadurch gekennzeichnet, daß** der Servoregler (8; 34) als eigenständiger Regler ausgebildet ist.

12. Gassicherheitsarmatur (1) mit zwei in Reihe geschalteten Sicherheitsventilen (2, 3) und mit einem Servoregler (8; 34) nach einem oder mehreren der Ansprüche 1 bis 11, **dadurch gekennzeichnet, daß** das Stellglied (13) des Servoreglers (8; 34) nach dem zweiten Sicherheitsventil (3) angeordnet ist.

## Claims

1. A two-stage servo controller (8; 34) for adjusting two different gas pressures (p), each of which is adapted to a load stage of a multi-stage burner, with a positioning member (13) by means of which the pressure prevailing in an input pressure space (10) upstream of the positioning member (13) can be adjusted to a lower pressure (p) in an output pressure space (12) downstream of the positioning member (13),
with a working diaphragm (15) controlling the positioning member (13), whereby a working space (29) provided on one side of the working diaphragm (15) communicates with the input pressure space (10),
with respective pilot controllers (22a, 22b; 35a, 35b) for each load stage, whereby, via each pilot controller (22a, 22b; 35a, 35b), a respective working space (27a, 27b) associated with each can be connected to the working space (29) under the working diaphragm (15), the working space (27a) of the pilot controller (22a; 35a) for the higher load stage being connected to the working pressure space (12),
and with at least one actuating means via which the pilot controller (22b; 35b) for the lower load stage can be activated or deactivated,
**characterised in that** in respect of the output pressure space (12), the pilot controllers (22a, 22b; 35a, 35b) are connected in series according to diminishing load stage and in that the actuating means is constructed as a magnetic valve (31) by means of which the working space (27b) of the pilot controller (22b; 35b) for the lower load stage can be connected to or separated from the working space (27a) of the pilot controller (22a; 35a) for the higher load stage.

2. A servo-controller according to claim 1, **characterised in that** the positioning member (13) is disposed in the region of the valve aperture of a safety valve (3).

3. A servo-controller according to claim 1 or 2, **characterised in that** the pilot controller (22a, 22b; 35a, 35b) consists of a diaphragm (23a, 23b) and a diaphragm plate (24a, 24b) which opens or closes a control aperture (28a, 28b) connecting the working space (27a, 27b) of the pilot controller (22a, 22b; 35a, 35b) with the working space (29) under the working diaphragm (15).

4. A servo-controller according to one of the preceding claims, **characterised in that** a pilot controller (22a, 22b; 35a, 35b) can be adjusted to a desired value, preferably via a desired value spring (25a, 25b; 40) and a desired value spring pretensioning means (26a, 26b; 41).

5. A servo-controller according to one of claims 1 to 4, **characterised in that** the pilot controller (22a, 22b) are each constructed as an independent controller.

6. A servo-controller according to one of claims 1 to 4, **characterised in that** two pilot controllers (35a, 35b) are coupled by a balance beam (36).

7. A servo-controller according to claim 6, **characterised in that** the pilot controller (35a) for the greater load stage is connected rigidly to the smaller lever arm of the balance beam (36) and the pilot controller (35b) for the lesser load stage is connected to the larger lever arm, preferably by means of an adjustable desired value spring (40).

8. A servo-controller according to one of the preceding claims, **characterised in that** a reference pressure space (20) above the working diaphragm (15), communicates with the output pressure space (12), particularly via a bore (21).

9. A servo-controller according to one of the preceding claims, **characterised in that** the positioning member (13) is coupled for movement to the working diaphragm (15) via a hollow shall (17), the through bore (32) of which connects the input pressure space (10) to the working space (29) under the working diaphragm (15).

10. A servo-controller according to one of the preceding claims, **characterised in that** the working diaphragm (15) is biased in its direction of closure preferably by a thrust spring (18).

11. A servo-controller according to one of the preceding claims, **characterised in that** the servo-controller (8; 34) is constructed as an independent controller.

12. A gas safety fitting (1) with two safety valves (2, 3) connected in series and with a servo-controller (8; 34) according to one or more of claims 1 to 11, **characterised in that** the positioning member (13) of the servo-controller (8; 34) is disposed downstream of the second safety valve (3).

## Revendications

1. Servorégulateur à deux étages (8 ; 34) destiné à établir deux pressions de gaz (p) différentes adaptées chacune à un étage de puissance d'un brûleur à plusieurs étages, comprenant :
- un organe de positionnement (13) au moyen duquel on peut amener la pression qui règne dans une chambre de pression d'entrée (10) avant l'organe de positionnement (13) à une pression plus faible (p) dans une chambre de pression de sortie (12) derrière l'organe de positionnement (13),
- une membrane de travail (15) qui commande l'organe de positionnement (13), une chambre de travail (29) prévue sur un côté de la membrane de travail (15) communiquant avec la chambre de pression d'entrée (10),
- un régulateur pilote (22a, 22b ; 35a, 35b) respectif pour chaque étage de puissance, de sorte qu'au moyen de chaque régulateur pilote (22a, 22b ; 35a, 35b) une chambre de travail (27a, 27b) qui lui est respectivement associée est susceptible d'être reliée à la chambre de travail (29) au-dessous de la membrane de travail (15), et la chambre de travail (27a) du régulateur pilote (22a ; 35a) pour l'étage de puissance le plus élevé est reliée à la chambre de pression de sortie (12), et
- au moins un dispositif d'actionnement au moyen duquel le régulateur pilote (22b ; 35b) pour l'étage de puissance le plus faible est susceptible d'être activé ou désactivé,
**caractérisé en ce que** les régulateurs pilote (22a, 22b ; 35a, 35b) sont branchés, par rapport à la chambre de pression de sortie (12), les uns derrière les autres par étage de puissance décroissant, et en ce que le dispositif d'actionnement est réalisé sous forme de vanne magnétique (31) au moyen de laquelle la chambre de travail (27b) du régulateur pilote (22b ; 35b) pour l'étage de puissance le plus faible est susceptible d'être reliée à la chambre de travail (27a) du régulateur pilote (22a ; 35a) pour l'étage de puissance plus élevé, ou d'être isolée vis-à-vis de celle-ci.

2. Servorégulateur selon la revendication 1, **caractérisé en ce que** l'organe de positionnement (16) est agencé dans la région de l'ouverture d'une vanne de sécurité (3).

3. Servorégulateur selon l'une ou l'autre des revendications 1 et 2, **caractérisé en ce qu'**un régulateur pilote (22a, 22b; 35a, 35b) est formé par une membrane (23a, 23b) et par un plateau de membrane (24a, 24b), lequel dégage ou obture une ouverture de commande (28a, 28b) qui relie la chambre de travail (27a, 27b) du régulateur pilote (22a, 22b ; 35a, 35b) avec la chambre de travail (29) sous la membrane de travail (15).

4. Servorégulateur selon l'une des revendications précédentes, **caractérisé en ce qu'**un régulateur pilote (22a, 22b ; 35a, 35b) est réglable à une valeur de consigne, de préférence au moyen d'un ressort de consigne (25a, 25b ; 40), et d'un dispositif de précontrainte (26a, 26b ; 41) pour le ressort de consigne.

5. Servorégulateur selon l'une des revendications 1 à 4, **caractérisé en ce que** chaque régulateur pilote (22a, 22b) est réalisé sous forme de régulateur autonome.

6. Servorégulateur selon l'une des revendications 1 à 4, **caractérisé en ce que** deux régulateurs pilote (35a, 35b) sont accouplés l'un à l'autre par un fléau de balance (36).

7. Servorégulateur selon la revendication 6, **caractérisé en ce que** le régulateur pilote (35a) pour l'étage de puissance le plus élevé est relié de façon rigide au bras de levier court du fléau de balance (36), et le régulateur pilote (35b) pour l'étage de puissance le plus faible est relié au bras de levier long, de préférence au moyen d'un ressort de consigne réglable (40).

8. Servorégulateur selon l'une des revendications précédentes, **caractérisé en ce qu'**une chambre de pression de référence (20) au-dessus de la membrane de travail (15) communique avec la chambre de pression de sortie (12), en particulier via un perçage (21).

9. Servorégulateur selon l'une des revendications précédentes, **caractérisé en ce que** l'organe de positionnement (13) est accouplé en termes de déplacement avec la membrane de travail (15) par l'intermédiaire d'un arbre creux (17), dont le perçage traversant (32) relie la chambre de pression d'entrée (10) avec la chambre de travail (29) sous la membrane de travail (15).

10. Servorégulateur selon l'une des revendications précédentes, **caractérisé en ce que** la membrane de travail (15) est repoussée dans sa direction de fermeture, de préférence au moyen d'un ressort de compression (18).

11. Servorégulateur selon l'une des revendications précédentes, **caractérisé en ce que** le servorégulateur (8 ; 34) est réalisé sous forme de régulateur autonome.

12. Robinetterie de sécurité de gaz (1) comprenant deux vannes de sécurité (2, 3) branchées en série, et un servorégulateur (8 ; 34) selon l'une ou plusieurs des revendications 1 à 11, **caractérisée en ce que** l'organe de positionnement (13) du servorégulateur (8 ; 34) est agencé après la deuxième vanne de sécurité (3).
